# EUROPEAN PATENT APPLICATION

(11) **EP 2 546 696 A1**
(43) Date of publication of application: **16.01.2013**
(21) Application number: 11753364.6
(22) Date of filing: 08.03.2011
(51) Int. Cl.: G03B 21/62, G02B 3/08, G02B 5/02, G02F 1/13, G09F 9/00

(54) **SMALL-FORM-FACTOR DISPLAY DEVICE WITH TOUCH-PANEL FUNCTIONALITY, AND SCREEN USED AS THE DISPLAY THEREIN**

(30) Priority: 29.07.2010 JP 2010170725; 08.03.2010 JP 2010050745
(71) Applicant: Dai Nippon Printing Co., Ltd., Tokyo 162-8001 (JP)
(72) Inventor: KAMIYA Masayuki, Tokyo 162-8001 (JP)
(74) Representative: Marshall, Caroline
(86) International application number: PCT/JP2011/055383
(87) International publication number: WO 2011/111706

(57) **Abstract**

[Problem to be Solved] The present invention provides a screen used as the display of a small-sized display device with a touch panel function that is capable of reducing double images, and the small-sized display device with a touch panel function.

[Solution] According to an embodiment of the present invention, a screen (1) for use as the display of a small-sized display device with a touch panel function comprises: a Fresnel lens sheet (2) including a Fresnel lens portion (22) and configured to convert image light projected from an image light source into light substantially parallel to the substantial normal direction of a screen surface (1a) and emit the converted light; and a light control sheet (4) located on the image light exiting side of the Fresnel lens sheet (2). In this screen, the light control sheet (4) comprises: unit light transmissive portions constituting part of the image light exiting surface of the light control sheet (4), the unit light transmissive portions extending in the transverse direction of the screen (1); and unit light absorbing portions constituting part of the image light exiting surface of the light control sheet (4), the unit light absorbing portions extending in the transverse direction of the screen (1), the unit light transmissive portions and the unit light absorbing portions being alternately arranged.

## Description

### Technical Field

The present invention relates to screens for use as the displays of small-sized display devices with touch panel functions, and small-sized display devices with touch panel functions comprising the screens.

### Background Art

There have been known touch panel devices that are capable of detecting positions by touching the display with a finger or a specially-designed pen or the like to operate a computer. As the position detecting methods for touch panel devices, various methods are known. Among the methods, those utilizing infrared light are now drawing attention.

A touch panel device of an infrared light detecting type that utilizes infrared light displays an image on the screen by projecting image light from the rear surface of the screen used as the display, and projects infrared light onto the screen from the rear surface of the screen to detect infrared light reflected by a finger or a pen or the like touching the screen and perform position detection.

As the screens to be used as the displays of touch panel devices of the infrared light detecting type, transmissive screens used in rear-projection televisions and the like are being considered.

Various types of transmissive screens to be used in rear-projection televisions and the like have been suggested, including those with a light diffuser sheet having light absorbing portions (see Patent Literatures 1 and 2, for example). The light diffuser sheet in this case is designed to diffuse image light in the transverse direction (the horizontal direction) when seen from the observer, and the light absorbing portions extend in the longitudinal direction (the vertical direction) when seen from the observer.

However, there is a demand for smaller touch panel devices. If a touch panel device having the above described conventional transmissive screen incorporated thereinto is made smaller in size, more double images (ghosts) easily appear than in rear-projection televisions.

### Related Art Literatures

### Patent Literatures

Patent Literature 1: JP 2003-50307 A
Patent Literature 2: JP 2003-57416 A

### Summary of Invention

### Technical Problem

The present invention has been made to solve the above problems. Specifically, the present invention aims to provide screens capable of reducing double images for use as the displays of small-sized display device with touch panel functions, and the small-sized display devices with touch panel functions.

### Solution to Problem

The inventors have found that double images appear in a small-sized display device with a touch panel function, for the following reasons. Specifically, in a small-sized display device with a touch panel function, the distance between the screen and the image light source is short, and therefore, the incident angle of image light with respect to the Fresnel lens sheet forming part of the screen is large. With this structure, there are times when image light entering the Fresnel lens sheet is reflected by the surface of the Fresnel lens portion of the Fresnel lens sheet. The reflected light might turn into stray light (ghost light), and be again reflected by the image light entering surface of the Fresnel lens sheet. The reflected light again enters the Fresnel lens portion, and exits from the Fresnel lens sheet. As a result, while the image light exits, the stray light exits from a different position from the original position, so that a double image appears. The present invention has been made based on those findings.

According to an embodiment of the present invention, a screen for use as the display of a small-sized display device with a touch panel function comprises: a Fresnel lens sheet having a Fresnel lens portion and configured to convert image light projected from an image light source into light substantially parallel to the substantial normal direction of the screen surface and emit the converted light; and a light control sheet located on the image light exiting side of the Fresnel lens sheet. In this screen, the light control sheet comprises: unit light transmissive portions that constitute part of the image light exiting surface of the light control sheet and extend in the transverse direction of the screen; and unit light absorbing portions that constitute part of the image light exiting surface of the light control sheet and extend in the transverse direction of the screen, the unit light transmissive portions and the unit light absorbing portions being alternately arranged.

According to another embodiment of the present invention, a screen for use as the display of a small-sized display device with a touch panel function comprises: a Fresnel lens sheet having a Fresnel lens portion and configured to convert image light projected from an image light source into light substantially parallel to the substantial normal direction of the screen surface and emit the converted light; and a light control sheet located on the image light exiting side of the Fresnel lens sheet. In this screen, the Fresnel lens portion has an optical center in a position decentered with respect to the center of the Fresnel lens portion formation face of the Fresnel lens sheet, and the light control sheet comprises: unit light transmissive portions constituting part of the image light exiting surface of the light control sheet; and unit light absorbing portions constituting part of the image light exiting surface of the light control sheet. The unit light transmissive portions and the unit light absorbing portions are alternately arranged in a first direction and extend in a second direction, the first direction being substantially parallel to the direction connecting the center of the Fresnel lens portion formation face and the optical center of the Fresnel lens portion, the first direction extending along the image light exiting surface, the second direction being substantially perpendicular to the first direction and extending along the image light exiting surface.

According to yet another embodiment of the present invention, a small-sized display device with a touch panel function comprises: the above described screen; an image light source that projects image light onto the screen; an infrared light source that projects infrared light onto the screen; and an infrared light detector capable of detecting the infrared light.

### Advantageous Effects of Invention

In the screen according to an embodiment of the present invention, the light control sheet comprises the unit light absorbing portions extending in the transverse direction. Accordingly, stray light can be absorbed by the unit light absorbing portions, so that double images can be reduced.

In the screen according to another embodiment of the present invention, the light control sheet comprises the unit light absorbing portions extending in the second direction. Accordingly, stray light can be absorbed by the unit light absorbing portions, so that double images can be reduced.

As the small-sized display device with a touch panel function according to the present invention comprises the above described screen, a small-sized display device with a touch panel function and reduced double images can be provided.

### Brief Description of Drawings

Fig. 1 is a schematic perspective view of a screen according to a first embodiment.
Fig. 2 is a schematic perspective view of the Fresnel lens sheet shown in Fig. 1.
Figs. 3A and 3B are ray tracing charts of image light entering the Fresnel lens sheet.
Fig. 4 is a vertical cross-sectional view of an another Fresnel lens sheet according to the first embodiment.
Fig. 5 is a schematic perspective view of the light control sheet shown in Fig. 1.
Fig. 6 is a vertical cross-sectional view of the light control sheet shown in Fig. 1.
Fig. 7 is a schematic cross-sectional view of a small-sized display device with a touch panel function according to the first embodiment.
Fig. 8 is a schematic view of the internal structure of the small-sized display device with a touch panel function according to the first embodiment.
Fig. 9 is a diagram illustrating the effects of the screen according to the first embodiment.
Fig. 10 is a schematic cross-sectional view of a small-sized display device with a touch panel function according to a second embodiment.
Fig. 11 is a schematic view of the internal structure of the small-sized display device of Fig. 10.

### Description of Embodiments

### (First Embodiment)

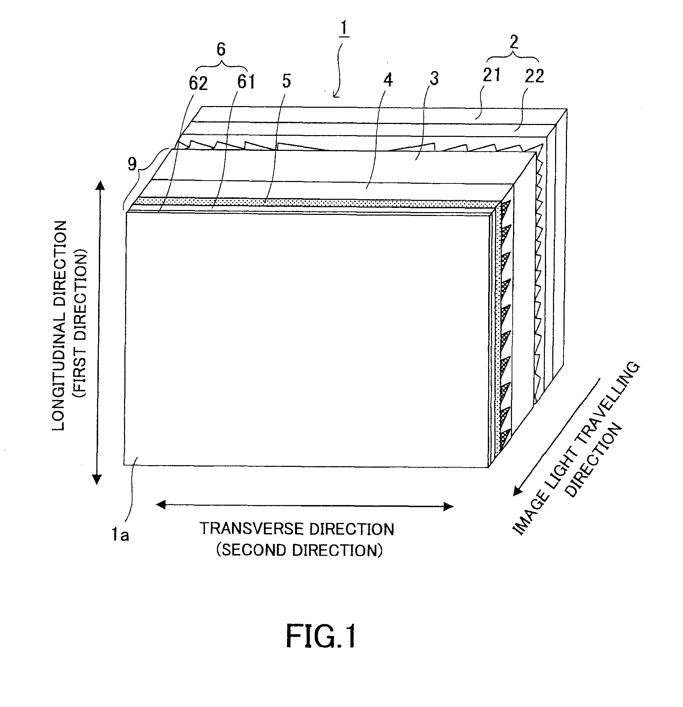

The following is a description of a first embodiment of the present invention, with reference to the accompanying drawings. Fig. 1 is a schematic perspective view of a screen according to the first embodiment.

The screen 1 shown in Fig. 1 is to be used as the display of a small-sized display device with a touch panel function. The screen 1 is formed by stacking a Fresnel lens sheet 2, a transparent base material 3, a light control sheet 4, a light diffuser plate 5, and an anti-glare sheet 6, in that order from the image light entering side to the exiting side. Here, the structure formed by stacking the transparent base material 3, the light control sheet 4, the light diffuser 5, and the anti-glare sheet 6 is referred to as a laminate plate 9. It should be noted that "plates" is a concept including members such as sheets and films.

The transparent base material 3 and the light control sheet 4, the light control sheet 4 and the light diffuser plate 5, and the light diffuser plate 5 and the anti-glare sheet 6 are bonded with adhesive or bonding layers (not shown). The material used as the adhesive or bonding layers is not particularly limited, as long as those layers can allow light to pass therethrough and cause the members to adhere or bond to one another.

### Fresnel Lens Sheet

The Fresnel lens sheet 2 converts image light projected from an image light source (not shown) to light substantially parallel to the substantial normal line of a screen surface 1a (the Fresnel lens sheet 2), and emits the converted light.

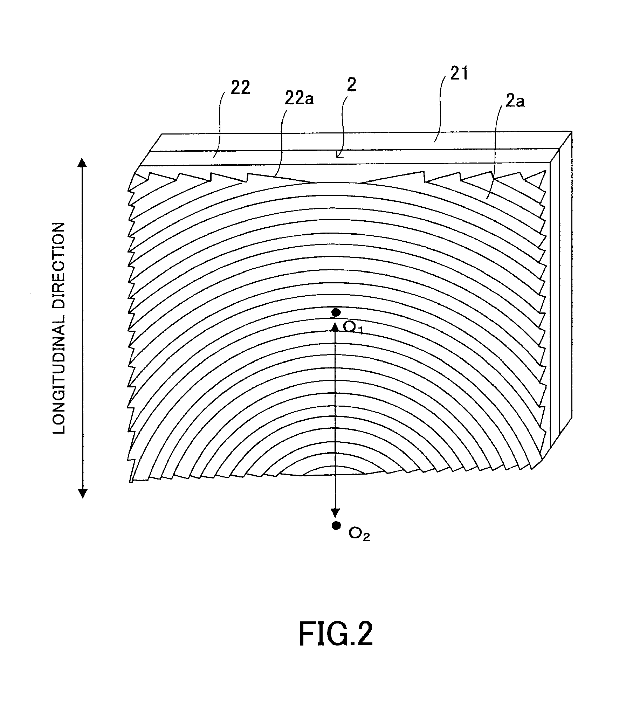

Fig. 2 is a schematic perspective view of the Fresnel lens sheet 2 shown in Fig.1. The Fresnel lens sheet 2 shown in Figs. 1 and 2 comprises a transparent base material 21 and a Fresnel lens portion 22 formed on one of the surfaces of the transparent base material 21. The transparent base material 21 and the Fresnel lens portion 22 are bonded with an adhesive or bonding layer (not shown).

The transparent base material 21 is in the form of a flat plate. The transparent base material 21 is a base material made of a transparent resin such as an acrylic resin, a styrene resin, a polyester resin, a polycarbonate resin, or an acrylic styrene copolymer resin.

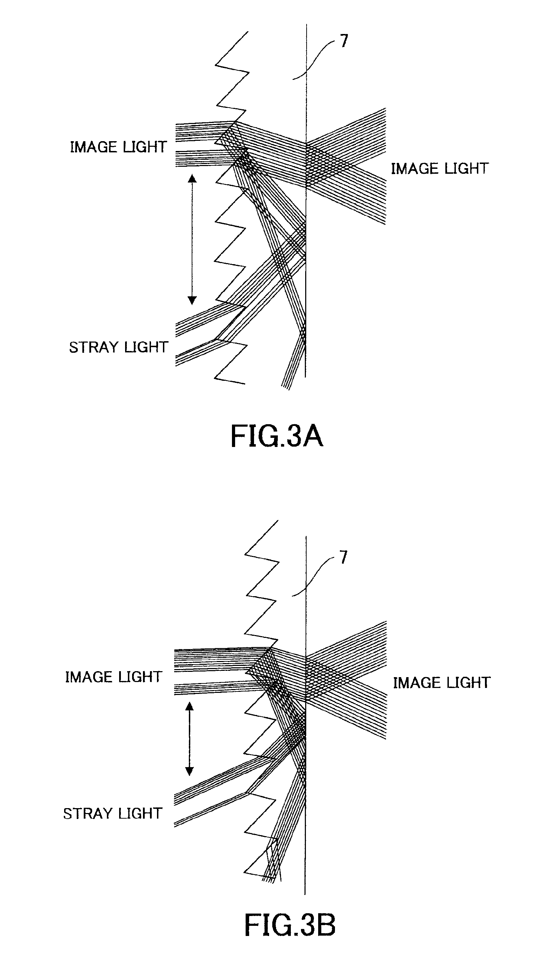

The thickness of the transparent base material 21 is preferably 1.0 to 3.0 mm, or more preferably, 1.5 to 2.0 mm. If the thickness of the transparent base material 21 is smaller than 1.0 mm, there is a possibility that the transparent base material 21 cannot adequately function as a base material. If the thickness of the transparent base material 21 is larger than 3.0 mm, double images are often recognized by observers for the following reasons. Figs. 3A and 3B are ray tracing charts of image light entering a Fresnel lens sheet. In a case where a Fresnel lens sheet 7 is thick as shown in Fig. 3A, the distance between image light and stray light emitted from the Fresnel lens sheet 7 is longer than that in a case where the Fresnel lens sheet 7 is thin as shown in Fig. 3B. If the distance becomes longer, double images are more likely to be recognized by observers. Therefore, in a case where the transparent base material 21 is thick, double images are likely to be recognized by observers even if the Fresnel lens portion 22 has the same thickness as those in other cases.

The Fresnel lens portion 22 has an optical center O₂ in a position that is decentered with respect to the center O₁ of the Fresnel lens portion formation face 2a of the Fresnel lens sheet 2. Specifically, the Fresnel lens portion 22 is formed with unit prisms 22a that are concentric arcs or concentric circles, with the optical center O₂ being the center.

The above "Fresnel lens portion formation face" is the face in which the Fresnel lens portion is formed in the Fresnel lens sheet. If the Fresnel lens sheet is of a refraction type, the Fresnel lens portion formation face is located on the image light exiting side. If the Fresnel lens sheet is of a total reflection type that will be described later, the Fresnel lens portion formation face is located on the image light entering side.

The optical center O₂ of the Fresnel lens portion 22 shown in Fig. 2 is located outside the Fresnel lens sheet 2. In a case where the image light source (not shown) is located in a lower position than the screen 1, for example, the optical center O₂ exists in a position that is outside the Fresnel lens sheet 2 and is on the lower side of the center O₁ of the Fresnel lens portion formation face 2a in the longitudinal direction of the screen 1. In the above description, the optical center O₂ exists outside the Fresnel lens sheet 2, but may exist in the Fresnel lens sheet 2.

In this specification, the "longitudinal direction" of the screen 1 is the vertical direction for an observer seeing the screen 1 from the front. The "transverse direction" of the screen 1 is the horizontal direction for an observer seeing the screen from the front.

As the Fresnel lens portion 22 having the decentered optical center O₂ is formed, image light can be converted into light substantially parallel to the substantial normal direction of the screen surface 1a, even if the distance between the Fresnel lens sheet 2 and the image light source is made shorter. In this embodiment, the Fresnel lens portion 22 having the optical center O₂ decentered with respect to the center O₁ of the Fresnel lens portion formation face 2a is used, it is also possible to use a Fresnel lens portion having an optical center not decentered with respect to the center of the Fresnel lens portion formation face.

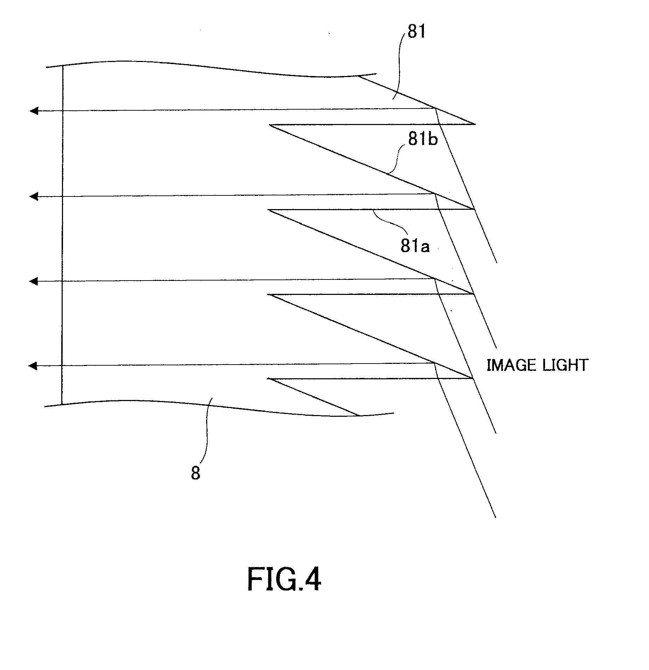

Although the Fresnel lens sheet 2 shown in Fig .2 is a Fresnel lens sheet of a refraction type, a Fresnel lens sheet 8 of a total reflection type shown in Fig. 4 can be used instead.

The total-reflecting Fresnel lens sheet 8 has unit prisms 81 that include refracting faces 81a that refract incident image light, and total reflecting faces 81b that totally reflect the light refracted by the refracting faces 81a and direct the light toward the image light exiting side. In a case where the total-reflecting Fresnel lens sheet 8 is used, the distance between the image light source and the Fresnel lens sheet 8 can be made even shorter. Accordingly, an even smaller-sized display device with a touch panel function can be provided.

### Transparent Base Material

The transparent base material 3 is to increase the rigidity of the screen 1. That is, since a finger or a specially-designed pen or the like is brought into contact with the screen 1, external stress is applied in the screen 1. Therefore, the screen 1 needs to have a certain degree of rigidity, and the transparent base material 3 is provided to increase the rigidity.

The rigidity of the screen 1 can be increased by increasing the thickness of the transparent base material 21 of the Fresnel lens sheet 2. However, if the thickness of the transparent base material 21 is increased, double images are often recognized by observers as described above. Therefore, providing the transparent base material 3 to increase the rigidity of the screen 1 is more effective than increasing the thickness of the transparent base material 21 to increase the rigidity of the screen 1, as recognizing double images becomes more difficult for observers. Also, as the rigidity of the screen 1 can be increased by providing the transparent base material 3, the transparent base material 21 of the Fresnel lens sheet 2 can be made thinner, and recognizing double images becomes even more difficult.

The thickness of the transparent base material 3 is preferably 2 mm or greater, or more preferably, 3 mm or greater, or even more preferably, 5 mm or greater. If the thickness of the transparent base material 3 is smaller than 2 mm, the function to increase the rigidity of the screen 1 might not be executed.

The transparent base material 3 is a base material made of a transparent resin such as an acrylic resin, a styrene resin, a polyester resin, a polycarbonate resin, or an acrylic styrene copolymer resin.

### Light Control Sheet

The light control sheet 4 is designed to pass image light that has entered the light control sheet 4, and absorb stray light that would otherwise cause double images.

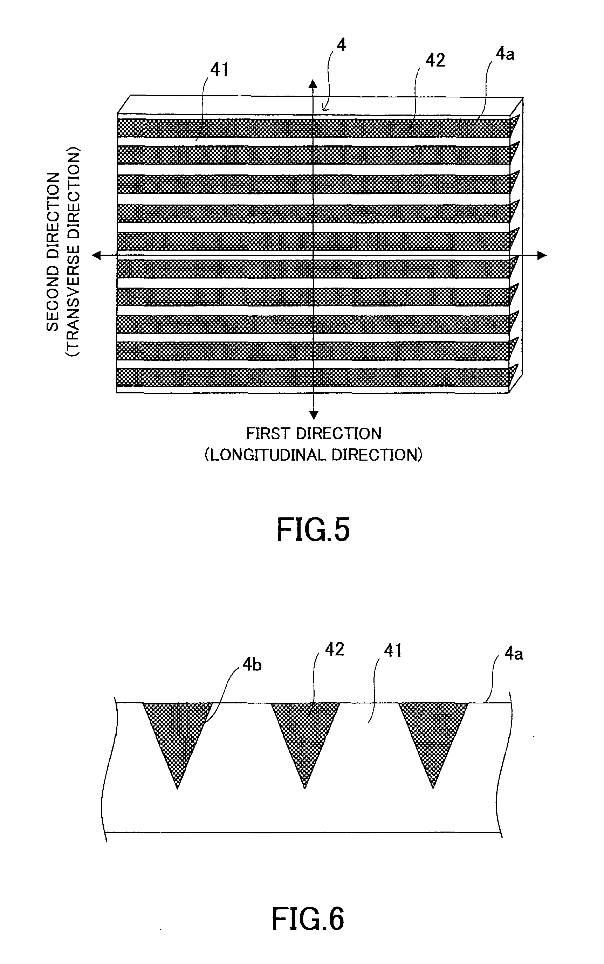

Fig. 5 is a schematic perspective view of the light control sheet 4 shown in Fig. 1. Fig. 6 is a vertical cross-sectional view of the light control sheet 4 shown in Fig. 1. As shown in Figs. 5 and 6, the light control sheet 4 comprises unit light transmissive portions 41 that pass entering image light, and unit light absorbing portions 42 that absorb stray light.

The unit light transmissive portions 41 and the unit light absorbing portions 42 constitute part of the image light exiting surface 4a of the light control sheet 4, and are arranged along the image light exiting surface 4a. The unit light transmissive portions 41 and the unit light absorbing portions 42 extend in the transverse direction of the screen 1, and are alternately arranged in the longitudinal direction of the screen 1.

In the positional relationship between the light control sheet 4 and the Fresnel lens sheet 2, the unit light transmissive portions 41 and the unit light absorbing portions 42 are alternately arranged in a first direction that are substantially parallel to the direction that connects the center O₁ of the Fresnel lens portion formation face 2a and the optical center O₂ of the Fresnel lens portion 22, the first direction extending along the image light exiting surface 4a. In this case, the unit light transmissive portions 41 and the unit light absorbing portions 42 extend in a second direction that is substantially perpendicular to the first direction and extends along the image light exiting surface 4a.

The cross-sectional shape of the unit light transmissive portions 41 in the thickness direction of the light control sheet 4 is preferably a substantially trapezoidal shape. This trapezoidal shape has the upper base, which is the image light exiting surface 4a, and the lower base, which is the image light entering side.

The unit light transmissive portions 41 are made of a light transmissive resin that passes image light. The light transmissive resin may be a resin such as epoxy acrylate that is normally cured by ionizing radiation such as electron rays or ultraviolet rays.

The unit light absorbing portions 42 are preferably formed in grooves 4b that are formed by the unit light transmissive portions 41 adjacent to the unit light absorbing portions 42 and each have a V-shaped cross-sectional shape, or a V-shaped cross-sectional shape with a truncated bottom. Specifically, in the case of the grooves 4b each having a V-shaped cross-sectional shape, the unit light absorbing portions 42 each have a substantially triangular cross-sectional shape with the image light exiting surface 4a serving as the bottom side in the thickness direction of the light control sheet 4. In the case of the grooves each having a V-shaped cross-sectional shape with a truncated bottom, the unit light absorbing portions 42 each have a substantially trapezoidal shape, with the upper base being the image light entering side of the light control sheet 4, the lower base being the image light exiting surface 4a of the light control sheet 4. Here, the length of the "lower base" is longer than the length of the "upper base."

The unit light absorbing portions 42 may be made of a transparent resin containing a light absorbing material or the like. The transparent resin is preferably a material having a lower refractive index than the refractive index of the transparent resin forming the unit light transmissive portions 41. Also, the transparent resin is not particularly limited, but may be an acrylate resin such as a urethane acrylate resin or an epoxy acrylate resin that is characteristically cured by ionizing radiation such as electron rays or ultraviolet rays, for example.

The light absorbing material has the function to absorb stray light that is visible light, and such a light absorbing material may be carbon black, graphite, a metal salt such as a black iron oxide, a pigment or a dye, or resin particles colored with a pigment or a dye.

The light absorbing material preferably passes infrared light. A material having such a function may be an ink mixed with a pigment or a dye. Examples of such pigments include a perylene black pigment, an aniline black pigment, a format ink (a pigment mixture of yellow, magenta, and cyan pigments), phthalocyanine blue, and brilliant carmine 6B.

In a case where the light absorbing material is resin particles colored with a pigment or a dye, the resin particles may be plastic beads such as melamine beads, acrylic beads, acrylic-styrene beads, polycarbonate beads, polyethylene beads, or polystyrene beads. Of those, acrylic beads are particularly preferable.

To perform infrared light detection, the light control sheet 4 is preferably designed to have an infrared transmittance of 70% or higher. More specifically, the light control sheet 4 is preferably designed to exhibit an infrared transmittance of 70% or higher with light of 830 to 900 nm in wavelength.

The above "transmittance" means the proportion (%) of the value measured where the light control sheet is placed so that light enters through the image light entering surface side, with respect to a reference value that is the value measured where the light control sheet is not provided in a spectral transmittance measurer. In measuring transmittances, MPC-2200 (manufactured by Shimadzu Corporation) can be used.

### Light Diffuser Plate

The light diffuser plate 5 is to diffuse image light exiting from the light control sheet 4. With the light diffuser plate 5, the viewing angle in the transverse direction of the screen 1 can be particularly widened. The light diffuser plate 5 may be formed by adding fine particles into a transparent base material.

The transparent base material may be a transparent resin film, a transparent resin plate, a transparent resin sheet, or transparent glass, for example. Examples of transparent resin films that can be used suitably here include a triacetate cellulose (TAC) film, a polyethylene terephthalate (PET) film, a diacetyl cellulose film, an acetate butyrate cellulose film, a polyether sulfone film, a polyacrylic resin film, a polyurethane resin film, a polyester film, a polycarbonate film, a polysulfone film, a polyether film, a polymethylpentene film, a polyetherketone film, and a (meth)acrylonitrile film.

As for the fine particles, organic fillers such as plastic beads are preferable, and those with high transparency are particularly preferable. Examples of plastic beads include melamine beads, acrylic beads, acrylic-styrene beads, polycarbonate beads, polyethylene beads, polystyrene beads, and vinyl chloride beads. Of those, acrylic beads are particularly preferable.

The thickness of the light diffuser plate 5 is preferably 0.1 to 2.0 mm, and more preferably, 0.2 to 1.5 mm. If the thickness of the light diffuser plate 5 is smaller than 0.1 mm, a sufficient light diffusing effect might not be achieved. If the thickness exceeds 2.0 mm, there is a possibility that images projected on the screen 1 are blurred, resulting in a poor resolution and a lower sensitivity for detecting infrared light.

### Anti-Glare Sheet

The anti-glare sheet 6 is designed to restrain decreases in visibility due to reflection of outside light or reflection images. The anti-glare sheet 6 comprises a transparent resin sheet 61 and an anti-glare hard coat layer 62 formed on the transparent resin sheet 61. The transparent resin sheet 61 is located on the image light entering side, and the anti-glare hard coat layer 62 is located on the image light exiting side. Instead of the anti-glare hard coat layer 62, a laminate including an anti-glare layer and a hard coat layer can be used.

The transparent resin sheet 61 can be formed by using polyethylene terephthalate (PET), triacetyl cellulose (TAC), or some other known transparent resin, for example. The anti-glare hard coat layer 62 contains a transparent resin such as an acrylic urethane ionizing radiation curable resin, and transparent fine particles dispersed in the transparent resin.

The screen 1 can be incorporated into a small-sized display device with a touch panel function. Such a small-sized display device may be an in-vehicle or shipboard small-sized display device with a touch panel function, for example.

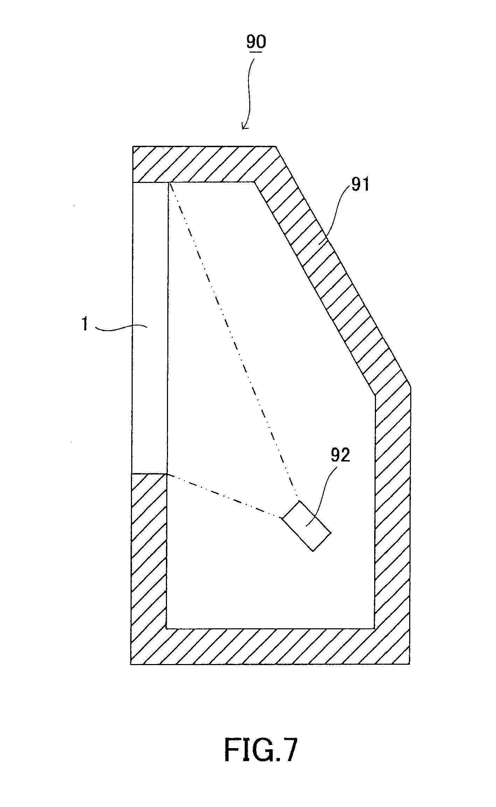

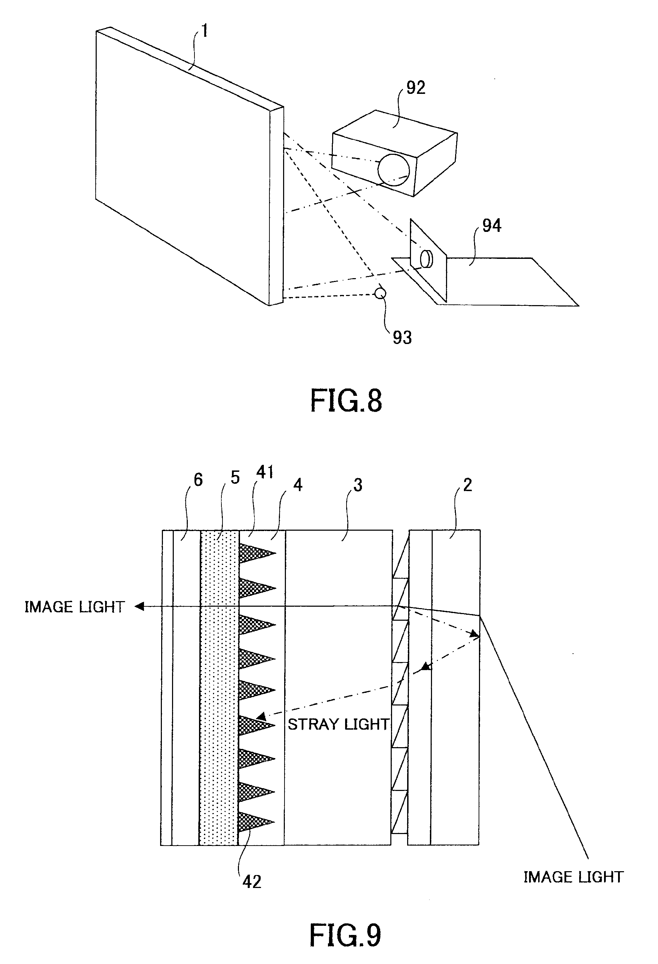

Fig. 7 is a schematic vertical cross-sectional view of a small-sized display device with a touch panel function according to this embodiment. Fig. 8 is a schematic view of the internal structure of the small-sized display device with a touch panel function according to this embodiment.

As shown in Fig. 7, the small-sized display device 90 with a touch panel function comprises the screen 1, a screen supporting member 91 supporting the screen 1, and an image light source 92 projecting image light onto the screen 1. Although not shown in Fig. 7, the small-sized display device 90 further comprises an infrared light source 93 projecting infrared light onto the screen 1, an infrared light detector 94 capable of detecting the infrared light, and the like, as shown in Fig. 8.

The image light source 92, the infrared light source 93, and the infrared light detector 94 are located on the rear surface side of the screen 1. As shown in Fig. 7, the image light source 92 is located in a lower position than the screen 1, and is designed to project image light onto the screen 1 without use of a mirror or the like. Alternatively, image light may be projected onto the screen 1 via a mirror or the like.

In this case, the screen 1 is positioned so that the extending direction of the unit light transmissive portions 41 and the unit light absorbing portions 42 is the transverse direction of the screen 1, and the optical center O₂ of the Fresnel lens portion 22 is located in a lower position than the center O₁ of the Fresnel lens portion formation face 2a in the longitudinal direction.

In Fig. 7, the image light source 92 is located in a lower position than the screen 1. However, the image light source 92 may be located in a higher position than the screen 1. In that case, the screen 1 is positioned so that the extending direction of the unit light transmissive portions 41 and the unit light absorbing portions 42 is the transverse direction of the screen 1, and the optical center O₂ of the Fresnel lens portion 22 is located in a higher position than the center O₁ of the Fresnel lens portion formation face 2a in the longitudinal direction.

The image light source 92 may be a small-sized light source such as a LED or a pico-projector using laser. The infrared light detector 93 may be a CCD camera, for example.

In this small-sized display device 90, image light emitted from the image light source 92 enters the Fresnel lens sheet 2 as shown in Fig. 9, is converted into substantially parallel light traveling in the substantial normal direction of the screen surface 1a, and exits from the Fresnel lens sheet 2. The image light then enters the light control sheet 4. Since the image light has been converted into parallel light by the Fresnel lens sheet 2, the image light exits from the light control sheet 4 via the unit light transmissive portions 41. After that, the image light is diffused by the light diffuser plate 5, and exits from the front surface of the screen 1 via the anti-glare sheet 6.

Meanwhile, stray light also exits from the Fresnel lens sheet 2, and enters the light control sheet 4. However, the stray light is not parallel light traveling in the substantial normal direction of the screen surface 1a. Therefore, the stray light can be absorbed by the unit light absorbing portions 42. Accordingly, only the necessary image light can be emitted, and double images can be reduced.

Also, the unit light absorbing portions 42 can absorb outside light. Accordingly, there is no reflection of outside light from the screen 1, and excellent visibility can be achieved. Thus, images with excellent contrast and sharpness can be realized.

Infrared light emitted from the infrared light source 93 passes through the screen 1. Accordingly, when a finger or a specially-designed pen or the like is brought into contact with the screen 1, infrared light is reflected by the finger or the like, so that position information about the finger or the like can be detected by the infrared light detector 94.

### (Second Embodiment)

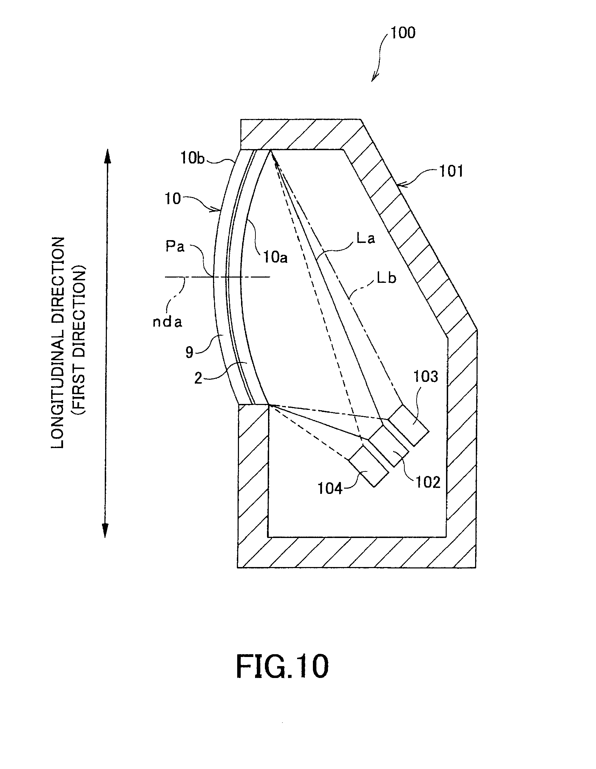

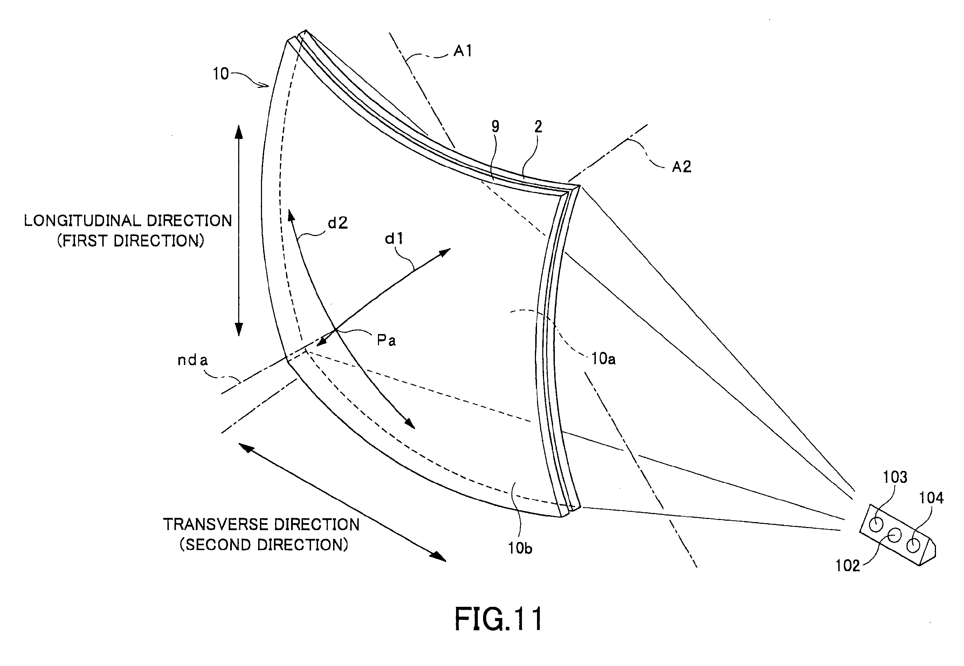

The following is a description of a second embodiment of the present invention, with reference to the accompanying drawings. Fig. 10 is a schematic cross-sectional view of a small-sized display device with a touch panel function according to this embodiment. Fig. 11 is a schematic view of the internal structure of the small-sized display device of Fig. 10.

As shown in Fig. 10, the small-sized display device 100 with a touch panel function comprises a screen 10, a screen supporting member 101 (a housing) supporting the screen 10, an image light source 102 projecting image light onto the screen 10, an infrared light source 103 projecting infrared light onto the screen 10, an infrared light detector 104 capable of detecting infrared light, and the like. The screen supporting member 101, the image light source 102, the infrared light source 103, and the infrared light detector 104 are the same as the screen supporting member 91, the image light source 92, the infrared light source 93, and the infrared light detector 94, respectively.

The screen 10 has the same structure as the screen 1, except that the screen 10 is curved to have a three-dimensionally curved surface as shown in Figs. 10 and 11. Specifically, the laminate plate 9 and the Fresnel lens sheet 2 of the screen 10 are curved so as to form three-dimensionally curved surfaces. Here, each three-dimensionally curved surface differs from a two-dimensionally curved surface that is two-dimensionally curved around a single axis, or a two-dimensionally curved surface that is two-dimensionally curved at different curvatures around axes parallel to each other. That is, a three-dimensionally curved surface is partially or totally curved around axes that are not parallel to each other. In this embodiment, the laminate plate 9 and the Fresnel lens sheet 2 are curved almost in the same manner, and substantially overlap each other. As a result, the screen 10 formed with the laminate plate 9 and the Fresnel lens sheet 2 is curved to form a three-dimensionally curved surface as a whole.

As described above, in this embodiment, the laminate plate 9 and the Fresnel lens sheet 2 each has a substantially rectangular shape when spread on a flat surface. In this embodiment as an example, the laminate plate 9 and the Fresnel lens sheet 2 are curved in a direction d1 having a first center axis A1 that is parallel to one of the diagonal lines and is located on the rear surface side (the light entering side) of the screen 10, and are also curved in a direction d2 having a second center axis A2 that is parallel to the other one of the diagonal lines and is located on the rear surface side (the light entering side) of the screen 10. As a result, the screen 10 is curved to form a protrusion toward the observer side, and the most protruding point of the light exiting surface 10b (the display surface) of the screen 10 is the center point Pa at which the pair of diagonal lines of the rectangular shape of the screen 10 on a flat surface cross each other.

The screen 10 is supported by the screen supporting member 101, so as to extend substantially in the longitudinal direction (a first direction) as shown in Fig. 10. Particularly, the plane (the plane in contact with the light exiting surface 10a at the most protruding point toward the light exiting side) perpendicular to the normal direction (hereinafter also referred to as the front direction) nda in the most protruding point (equivalent to the center point Pa of the screen 10 in this embodiment) protruding toward the light exiting side of the light exiting surface 10b of the screen 10 is parallel to the vertical direction. As shown in Fig. 10, in this embodiment, the image light source 102 is located in a lower position than the lower edge of the screen 10 in the longitudinal direction (the first direction) in the screen supporting member 101.

The terms used in this specification to define shapes and geometric conditions, such as "parallel" and "perpendicular", are not strictly limited to their definitions, but should be interpreted as allowing errors within the range to achieve a likewise optical function to such a degree that cannot be visually recognized.

Since the screen 10 of this embodiment is curved to form a three-dimensionally curved surface, the small-sized display device 100 can be provided in a variety of designs. Accordingly, the small-sized display device 100 can be designed depending on a place (a site) where the small-sized display device 100 is to be placed and on the purpose of use of the small-sized display device 100. The small-sized display device 100 can be used in fields that put emphasis on design these days, such as automobiles and amusement machines. The small-sized display device 100 used in such fields are not only expected to have the function to simply display images but also strongly required to harmonize the entire system and the design. The small-sized display device 100 according to this embodiment allows a much wider variety of designs that can be added to display devices, thanks to the screen 10 that is curved to form a three-dimensionally curved surface. With the display device of this embodiment that can exhibit such a wide variety of designs, the entire system in which the small-sized display device 100 is to be used can be harmonized with its design, and the demand for this system exhibiting harmonized, excellent design can be effectively increased.

It should be noted that the present invention is not limited to the above described embodiments, but changes may be made to the configurations, the materials, and the layout of the respective components, without departing from the scope of the invention.

### Example

The present invention is now specifically described through the following example.

### Example

A screen having a structure described in the above embodiments was prepared. Specifically, the screen was 300 mm long and 400 mm wide. An acrylic plate of 1.3 mmt in thickness was used as the transparent base material of the Fresnel lens sheet. The Fresnel lens portion of the Fresnel lens sheet was made of an ultraviolet curable resin (epoxy acrylate), and was 33 µm in unit prism pitch. An acrylic plate of 5 mmt in thickness was used as the transparent base material interposed between the Fresnel lens sheet and the light control sheet.

The light control sheet included unit light transmissive portions and unit light absorbing portions formed on a polyethylene terephthalate (PET) film, and was 0.3 mmt in thickness. The unit light transmissive portions of the light control sheet were made of an ultraviolet curable resin (epoxy acrylate), and the refractive index of the unit light transmissive portions was 1.560. The unit light absorbing portions of the light control sheet were made of an ultraviolet curable resin (epoxy acrylate) containing a pigment, and the refractive index of the unit light absorbing portions was 1.505. The width of the unit light absorbing portions was 39 µm in the image light exiting surface, and the distances between the edges of the unit light absorbing portions on the image light entering side were 65 µm. Further, the angle formed by the normal line of the polyethylene terephthalate (PET) film and the unit light absorbing portions was 9 degrees.

The diffuser plate was made of methylmethacrylate butadiene styrene copolymer (MBS), and the thickness of the diffuser plate was 0.8 mmt. As the anti-glare sheet, one that was formed by providing an ultraviolet curable resin (urethane acrylate) having hard coat properties on polyethylene terephthalate was used.

In this example, the Fresnel lens portion and the like were formed by using an ultraviolet curable resin such as epoxy acrylate or urethane acrylate. Other than that, polyether acrylate or the like may be used. Also, an ultraviolet curable resin is not necessarily used, and some other photocurable resin such as an ionizing radiation curable resin may be used.

### Comparative Example

A screen used as a comparative example was the same as the example, except that the unit light transmissive portions and the unit light absorbing portions extended substantially parallel to the direction connecting the center of the Fresnel lens portion formation face and the optical center of the Fresnel lens portion, and were alternately arranged in a direction substantially perpendicular to the extending direction of the unit light transmissive portions.

The screens according to the example and the comparative example were incorporated into small-sized display devices. The screen according to the example was incorporated in such a manner that the extending direction of the unit light transmissive portions and the unit light absorbing portions was the transverse direction of the screen, and the optical center of the Fresnel lens portion was located in a lower position than the center of the Fresnel lens portion formation face in the longitudinal direction. The screen according to the comparative example was incorporation in such a manner that the extending direction of the unit light transmissive portions and the unit light absorbing portions was the longitudinal direction of the screen, and the optical center of the Fresnel lens portion was located in a lower position than the center of the Fresnel lens portion formation face in the longitudinal direction.

### Evaluations and Results

In each of the small-sized display devices having the screens of the example and the comparative example incorporated thereinto, image light was projected onto the screen, and a check was made to determine whether a double image appeared on the screen surface on the observer side.

On the screen according to the comparative example, a ghost appeared in a position 10 mm lower than the proper display position on the screen surface, and a double image was observed. On the screen according to the example, on the other hand, no ghosts appeared on the screen surface, and any double image was not observed. Those results confirmed that double images could be reduced when the screen according to the example was incorporated into a small-sized display device.

### Reference Signs List

1, 10 screen
1a screen surface
2 Fresnel lens sheet
2a Fresnel lens portion formation face
3 transparent base material
4 light control sheet

5 light diffuser plate
6 anti-glare sheet
21 transparent base material
22 Fresnel lens portion
22a unit prism
41 unit light transmissive portions
42 unit light absorbing portions
90, 100 small-sized display device with a touch panel function
92, 102 image light source
93, 103 infrared light source
94, 104 infrared light detector

## Claims

1. A screen for use as a display of a small-sized display device with a touch panel function, comprising:
a Fresnel lens sheet having a Fresnel lens portion and configured to convert image light projected from an image light source into light substantially parallel to a substantial normal direction of a screen surface and emit the converted light; and
a light control sheet located on an image light-exiting side of the Fresnel lens sheet,
wherein the light control sheet comprises: a plurality of unit light transmissive portions constituting part of an image light exiting surface of the light control sheet, the unit light transmissive portions extending in a transverse direction of the screen; and a plurality of unit light absorbing portions constituting part of the image light-exiting surface of the light control sheet, the unit light absorbing portions extending in the transverse direction of the screen, the unit light transmissive portions and the unit light absorbing portions being alternately arranged.

2. The screen according to claim 1, wherein the Fresnel lens portion has an optical center decentered downward in a longitudinal direction of the screen, with respect to a center of a Fresnel lens portion formation face of the Fresnel lens sheet.

3. A screen for use as a display of a small-sized display device with a touch panel function, comprising:
a Fresnel lens sheet having a Fresnel lens portion and configured to convert image light projected from an image light source into light substantially parallel to a substantial normal direction of a screen surface and emit the converted light; and
a light control sheet located on an image light exiting side of the Fresnel lens sheet,
wherein
the Fresnel lens portion has an optical center in a position decentered with respect to a center of a Fresnel lens portion formation face of the Fresnel lens sheet,
the light control sheet comprises: a plurality of unit light transmissive portions constituting part of an image light exiting surface of the light control sheet, and a plurality of unit light absorbing portions constituting part of the image light exiting surface of the light control sheet, and
the unit light transmissive portions and the unit light absorbing portions are alternately arranged in a first direction and extend in a second direction, the first direction being substantially parallel to a direction connecting the center of the Fresnel lens portion formation face and the optical center of the Fresnel lens portion, the first direction extending along the image light exiting surface, the second direction being substantially perpendicular to the first direction and extending along the image light exiting surface.

4. The screen according to any of claims 1 to 3, wherein a cross-sectional shape of the unit light absorbing portions is one of a substantially triangular shape whose bottom side is the image light exiting surface of the light control sheet, and a substantially trapezoidal shape whose an upper base is an image light entering side of the light control sheet and a lower base is the image light exiting surface of the light control sheet.

5. The screen according to any of claims 1 to 4, wherein the unit light absorbing portions contain a transparent resin and a light absorbing material dispersed in the transparent resin.

6. The screen according to any of claims 1 to 5, further comprising
a transparent base material interposed between the light control sheet and the Fresnel lens sheet, a thickness of the transparent base material being 2 mm or greater.

7. The screen according to any of claims 1 to 6, further comprising
a light diffuser plate located on the image light exiting surface side of the light control sheet, a thickness of the light diffuser plate being 0.1 to 2.0 mm.

8. The screen according to any of claims 1 to 7, wherein the Fresnel lens sheet further comprises a transparent base material supporting the Fresnel lens portion, a thickness of the transparent base material supporting the Fresnel lens portion being 1.0 to 3.0 mm.

9. The screen according to any of claims 1 to 8, which is used as a display of an in-vehicle small-sized display device with a touch panel function.

10. The screen according to any of claims 1 to 9, which is curved to form a three-dimensionally curved surface.

11. A small-sized display device with a touch panel function, comprising:
the screen according to any of claims 1 to 10;
an image light source configured to project image light onto the screen;
an infrared light source configured to project infrared light onto the screen; and
an infrared light detector capable of detecting the infrared light.
